# EUROPEAN PATENT APPLICATION

(11) **EP 4 332 932 A1**
(43) Date of publication of application: **06.03.2024**
(21) Application number: 22795290.0
(22) Date of filing: 08.03.2022
(51) Int. Cl.: G08B 13/196, G08B 25/00

(54) **THEFT PREVENTION DEVICE, THEFT PREVENTION METHOD, AND PROGRAM**

(30) Priority: 28.04.2021 JP 2021075574
(71) Applicant: Space Power Technologies Inc., Kyoto-shi, Kyoto 615-8245 (JP)
(72) Inventor: TAKABAYASHI, Nobuyuki, Kyoto-shi, Kyoto 615-8245 (JP); FURUKAWA, Minoru, Kyoto-shi, Kyoto 615-8245 (JP)
(74) Representative: AWA Sweden AB
(86) International application number: PCT/JP2022/009856
(87) International publication number: WO 2022/230367

(57) **Abstract**

According to an aspect of the present disclosure, an antitheft apparatus includes: means for acquiring first event information related to an alert mode; means for controlling the alert mode in accordance with the first event information; means for monitoring movement of an object when the alert mode is enabled; and means for outputting an alarm when the alert mode is enabled and movement of the object is detected.

## Description

### FIELD

The present disclosure relates to an antitheft apparatus, an antitheft method, and a program.

### BACKGROUND

A user using a spot in a space used by the general public (public space), such as a restaurant, a library, or a co-working space, may temporarily leave the used spot (e.g., a seat) to make a phone call, go to the toilet, or the like. In this case, the user commonly carries his or her belongings such as valuables in order to prevent the belongings from being stolen. For example, a user who has been working on a laptop would close the laptop in the middle of a task, and carry it with him or her, and then open it again after returning to his or her seat to start working.

Patent Literature 1 describes a technique intended for detection of a suspicious object appearing in time-series images.

### CITATION LIST

[Patent Literature 1] Jpn. Pat. Appln. KOKAI Publication No. 2020-091829

### SUMMARY

### TECHNICAL PROBLEM

The technique of Patent Literature 1 may allow detection of an action that is different from normal. However, for example, a third party taking away a user's belongings is very likely to constitute an act of theft, whereas a user taking away his or her own belongings is a legitimate act. Therefore, when the action of taking away an article is defined as a normal action, a third party taking away an article of the user will be ignored as a normal action. On the other hand, when the action of taking away an article is defined as an action that is different from normal, even the user taking away his/her own article will be detected as an action that is different from normal.

In the technique of Patent Literature 1, individual identification information is created and transmitted when a suspicious object is detected; however, such handling is not expected to be effective in inhibiting the suspicious object from taking an action that is different from normal.

An object of the present disclosure is to prevent the user's belongings from being stolen mainly in a public space.

### SOLUTION TO PROBLEM

According to an aspect of the present disclosure, an antitheft apparatus includes: means for acquiring first event information related to an alert mode; means for controlling the alert mode in accordance with the first event information; means for monitoring movement of an object when the alert mode is enabled; and means for outputting an alarm when the alert mode is enabled and movement of the object is detected.

### ADVANTAGEOUS EFFECT OF INVENTION

According to the present disclosure, it is possible to prevent a user's belongings from being stolen mainly in a public space.

### BRIEF DESCRIPTION OF THE DRAWINGS

FIG. 1 is a block diagram showing a configuration of an antitheft system according to a present embodiment.
FIG. 2 is a block diagram illustrating a configuration of an antitheft apparatus according to the present embodiment.
FIG. 3 is a block diagram illustrating a configuration of an output device to be connected to the antitheft apparatus according to the present embodiment.
FIG. 4 is a block diagram illustrating a configuration of a protection object according to the present embodiment.
FIG. 5 is a diagram showing an example application of the antitheft apparatus according to the present embodiment.
FIG. 6 is a diagram showing an example of a gesture set for enabling/disabling an alert mode.
FIG. 7 is a diagram showing an example behavior of an indicator when the alert mode is enabled.
FIG. 8 is a diagram showing an example behavior of an alarm device when the alert mode is enabled and a movement of the protection object is detected.
FIG. 9 is a diagram showing an example behavior of the alarm device when the alert mode is disabled and a movement of the protection object is detected.
FIG. 10 is a diagram showing a data structure of a user database according to the present embodiment.
FIG. 11 is a diagram showing a data structure of a protection object database according to the present embodiment.
FIG. 12 is a flowchart for power supply start processing according to the present embodiment.
FIG. 13 is a flowchart for standby processing according to the present embodiment.
FIG. 14 is an explanatory diagram of a hand detection area and a no-entry area according to the present embodiment.
FIG. 15 is a flowchart for antitheft processing according to the present embodiment.
FIG. 16 is a flowchart for power supply control processing according to the present embodiment.

### DETAILED DESCRIPTION

Hereinafter, an embodiment of the present invention will be described in detail based on drawings. Note that in the drawings for explaining the embodiment, the same components are generally denoted by the same reference sign, and redundant descriptions thereof will be omitted.

### (1) Configuration of Antitheft System

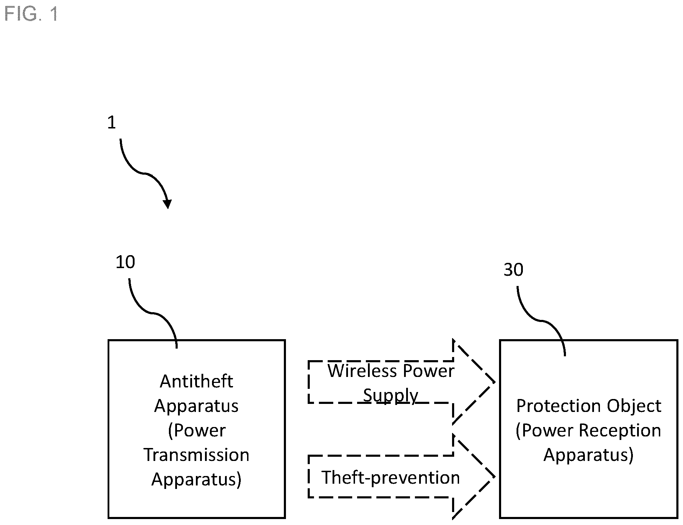

A configuration of an antitheft system will be described. FIG. 1 is a block diagram showing a configuration of the antitheft system according to the present embodiment.

As shown in FIG. 1, the antitheft system 1 includes an antitheft apparatus 10 and a protection object 30. In the antitheft system 1, the antitheft apparatus 10 provides the protection object 30 with a wireless power supply service in addition to an antitheft service. Therefore, the antitheft apparatus 10 can also be referred to as a power transmission apparatus. Similarly, the protection object 30 can also be referred to as a power reception apparatus.

The antitheft apparatus 10 and the protection object 30 may be configured to be capable of wirelessly communicating with each other. The wireless communication takes any scheme such as Bluetooth (registered trademark), ZigBee (registered trademark), specific low-power wireless communication, or wireless Local Area Network (LAN).

The antitheft apparatus 10 provides an antitheft service for the protection object 30 in response to an instruction from a user of the protection object 30 (owner of the protection object 30). As an example, the antitheft apparatus 10 is installed in a public space. The public space is, for example, a space in which a person other than the user of the protection object 30 may stay (i.e., where theft damage may occur), such as an eating and drinking establishment (e.g., a café or a restaurant) or a co-working space.

Further, the antitheft apparatus 10 performs wireless power supply to the protection object 30 in response to an instruction from a user of the protection object 30 or in response to a power supply request from the protection object 30 or another communication apparatus operated by the user.

The protection object 30 includes a battery (not shown). The protection object 30 charges the battery using the energy of a power transmission beam emitted from the antitheft apparatus 10.

The protection object 30 is any electronic equipment that can be driven by a battery. As an example, the protection object 30 is a mobile computer (e.g., a smartphone, a tablet terminal, a laptop computer, or a wearable device) or another electronic equipment, or a mobile battery.

While one antitheft apparatus 10 and one power protection object 30 are shown in FIG. 1, the numbers of the antitheft apparatuses 10 and the protection objects 30 are not limited to one.

When there are a plurality of protection objects 30, information for identifying the protection object 30 or information for identifying the user of the protection object 30 may be included in the instruction from the user or the power supply request. This allows the antitheft apparatus 10 to identify the protection object 30 (a target power reception apparatus) targeted for the wireless power supply.

When there are a plurality of antitheft apparatuses 10, some of these apparatuses may cooperate to perform the wireless power supply, or one of them may perform the wireless power supply. The antitheft apparatus 10 that performs the wireless power supply may be designated by the target power reception apparatus or may be determined by one or more antitheft apparatuses 10 that have received an instruction from the user or a power supply request.

### (1-1) Configuration of Antitheft Apparatus

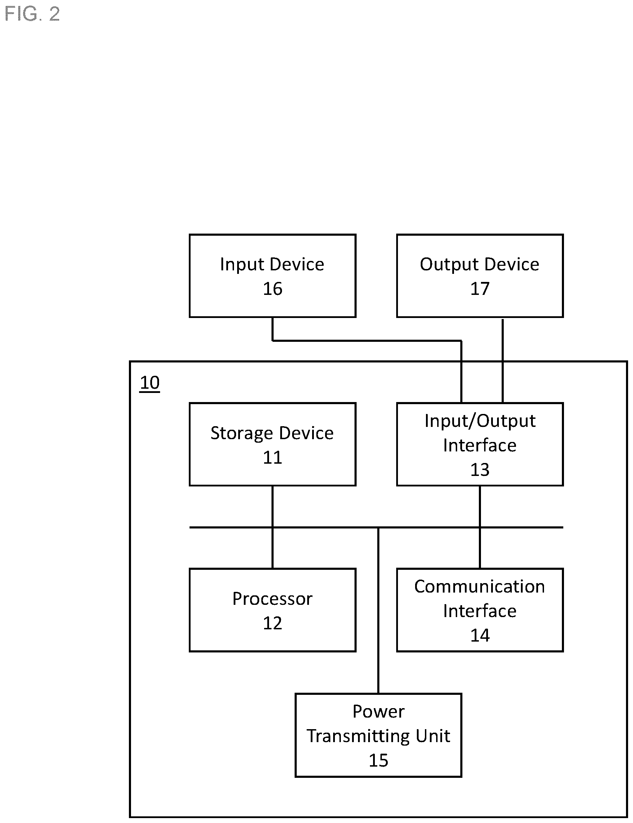

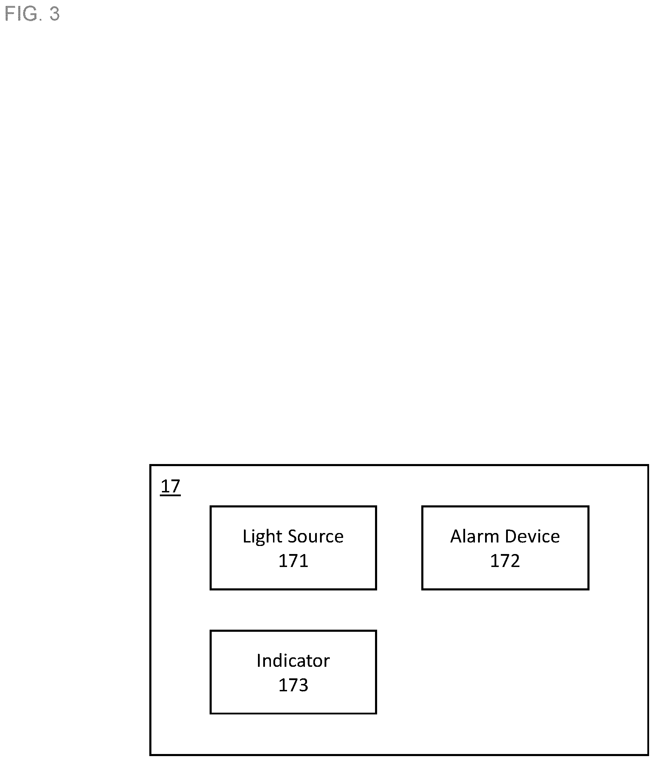

A configuration of the antitheft apparatus according to the present embodiment will be described. FIG. 2 is a block diagram illustrating a configuration of the antitheft apparatus according to the present embodiment. FIG. 3 is a block diagram illustrating a configuration of an output device to be connected to the antitheft apparatus according to the present embodiment.

As shown in FIG. 2, the antitheft apparatus 10 includes a storage device 11, a processor 12, an input/output interface 13, a communication interface 14, and a power transmitting unit 15. The antitheft apparatus 10 is connectible to at least one of an input device 16 and an output device 17.

The storage device 11 is configured to store a program and data. The storage device 11 is, for example, a combination of read-only memory (ROM), random-access memory (RAM), and a storage (e.g., a flash memory or a hard disk).

The program includes, for example, the following program:
· A program in an operating system (OS); and
· A program of an application for executing information processing (e.g., antitheft processing, power supply control processing).

The data includes, for example, the following data:
· A database to be referred to in information processing; and
· Data obtained by executing the information processing (i.e., the result of executing the information processing).

The processor 12 is configured to realize functions of the antitheft apparatus 10 (in particular, a function of preventing the protection object 30 to be stolen and a function of controlling the power transmitting unit 15) by activating the program stored in the storage device 11. The processor 12 is an example of a computer or a controller.

The input/output interface 13 is configured to acquire a signal (e.g., an instruction from a user, sensing data, or a combination thereof) from the input device 16 to be connected to the antitheft apparatus 10, and to output a signal (e.g., a control signal, an image signal, or a combination thereof) to the output device 17 to be connected to the antitheft apparatus 10.

The input device 16 is, for example, a keyboard, a pointing device, a touch screen, a sensor (e.g., an optical sensor), or a combination thereof.

The optical sensor may include, for example, at least one of the following:
· A camera;
· Lidar; and
· A time-of-flight (ToF) camera.

The optical sensor (e.g., a camera) photographs a periphery of the protection object 30 in accordance with, for example, a control signal from the processor 12. The camera may be configured so that at least one of a position or a posture of the camera can be controlled in accordance with a position of the protection object 30. However, the position and the posture of the camera are preferably controlled so that the faces of the user of the protection object 30 and other person are not included in the shooting range. This allows acquisition of an image necessary to provide at least one of an antitheft service and a wireless power supply service without causing discomfort or suspicion to persons in the space where the antitheft apparatus 10 is installed.

The output device 17 is, for example, a display, a speaker, a light source, an alarm device, an indicator, or a combination thereof.

As shown in FIG. 3, the output device 17 includes a light source 171, an alarm device 172, and an indicator 173.

The light source 171 illuminates the periphery of the protection object 30 in accordance with, for example, the control from the processor 12. Accordingly, an edge (to be described later) can be more accurately identified from image data captured by the camera. For example, the light source 171 emits light along a photographing direction of the camera. When a monitoring object (e.g., a hand of a person) is present within an emission range of the light, since a part of emitted light is reflected by the monitoring object, a part of the emitted light does not reach an area that is blocked by the monitoring object. In other words, a difference in an amount of reached light is created between the monitoring object and the area blocked by the monitoring object. Therefore, in the image captured by the camera, brightness of the monitoring object increases while brightness of a periphery of the monitoring object relatively decreases (a shadow is created). Therefore, according to the light source 171, a difference in brightness between the monitoring object and a periphery thereof can be increased and an edge of the monitoring object can be more accurately identified.

The light source 171 may be configured so that at least one of a position or a posture of the light source 171 can be controlled in accordance with a position of the protection object 30. The light source 171 may be continuously turned on or may be intermittently turned on according to the photographing by the camera.

The alarm device 172 outputs an alarm in response to control from the antitheft apparatus 10.

As an example, the alarm device 172 is installed in the periphery of the protection object 30 so that a person in the periphery of the protection object 30 (a person who has taken away the protection object 30 or a guest or manager of the public space) will be more likely to perceive the alarm. The alarm stimulates human sense of touch, smell, or taste, not limited to human vision or hearing, thereby causing surrounding people to perceive at least one of the presence of the alarm itself and the contents of the alarm. The alarm device 172 includes, for example, a light source, a lamp, a display, a projector, a smoke generator, a speaker, a vibrator, a mist generator, an odor generator, a taste stimulator (e.g., a mouthpiece-type device capable of supplying a taste stimulant to the tongue of a wearer), or a combination thereof.

Alternatively, the alarm device 172 may be a communication apparatus carried by the user of the protection object 30. The communication apparatus carried by the user of the protection object 30 may be registered in advance in association with the user or the protection object 30 or may be detected based on the position information for the communication apparatus. By causing such a communication apparatus to output an alarm, the antitheft apparatus 10 can notify the user of the protection object 30 of the taking of the protection object 30 at an early stage.

The indicator 173 outputs visual information in response to control from the antitheft apparatus 10. The antitheft apparatus 10 generates an instruction to output visual information in accordance with its own operation mode (e.g., enabling/disabling of an alert mode (to be described later), enabling/disabling of a power supply mode, or a combination thereof), and transmits the instruction to the indicator 173. Accordingly, the user of the protection object 30 can be enabled to intuitively recognize a start and an end of the provision of the antitheft service or the wireless power supply service. As an example, the indicator 173 emits light in a first color when the alert mode of the antitheft apparatus 10 is enabled, and emits light in a second color different from the first color when the alert mode of the antitheft apparatus 10 is disabled. The indicator 173 may be an apparatus independent of the light source 171 or the alarm device 172, or at least one of the light source 171 or the alarm device 172 may also serve as the indicator 173.

The communication interface 14 is configured to control communication between the antitheft apparatus 10 and an external apparatus (e.g., the protection object 30 or another communication apparatus operated by a user).

As an example, the communication interface 14 is a wireless communication module supporting at least one system of Bluetooth, ZigBee, specified low-power radio communication, and a wireless LAN.

The power transmitting unit 15 is configured to emit a power-supplying electromagnetic wave as a power transmission beam (i.e., perform wireless power supply) in response to a control signal from the processor 12. The power-supplying electromagnetic wave is, for example, a microwave, a millimeter wave, or a light wave (laser light or LED light). In the following description, the power-supplying electromagnetic wave is assumed to be a microwave.

More specifically, the power transmitting unit 15 includes a signal source, a signal processing circuit, and a plurality of antennas (an example of a "beam-emitting element").

The signal source is, for example, an oscillator that generates the power-supplying electromagnetic wave.

The signal processing circuit performs, for example, signal processing including at least one of phase adjustment, amplitude adjustment, and filtering on the power-supplying electromagnetic wave generated by the signal source. The signal processing circuit may include an amplifier for the amplitude adjustment (power amplification).

The antenna emits the power-supplying electromagnetic wave output from the signal processing circuit into space as a power transmission beam. A lamp serving as the alarm device 172 or the indicator 173 may be attached around the antenna. As an example, by turning on the lamp, surrounding people can perceive that the wireless power supply is being carried out.

The power transmitting unit 15 may include a planar antenna or a linear antenna. The plurality of antennas may be arranged in an array, in a matrix, or in different manners.

The plurality of antennas form a power transmission surface. The power transmission surface corresponds to a portion of the power transmitting unit 15 that takes charge of emitting the power transmission beam. The power transmission surface depends on the configuration of the power transmitting unit 15 (e.g., the size, shape, arrangement, and number of the antenna). As an example, a rectangular power transmission surface including all the antennas provided for the power transmitting unit 15 may be defined.

### (1-2) Configuration of Protection Object

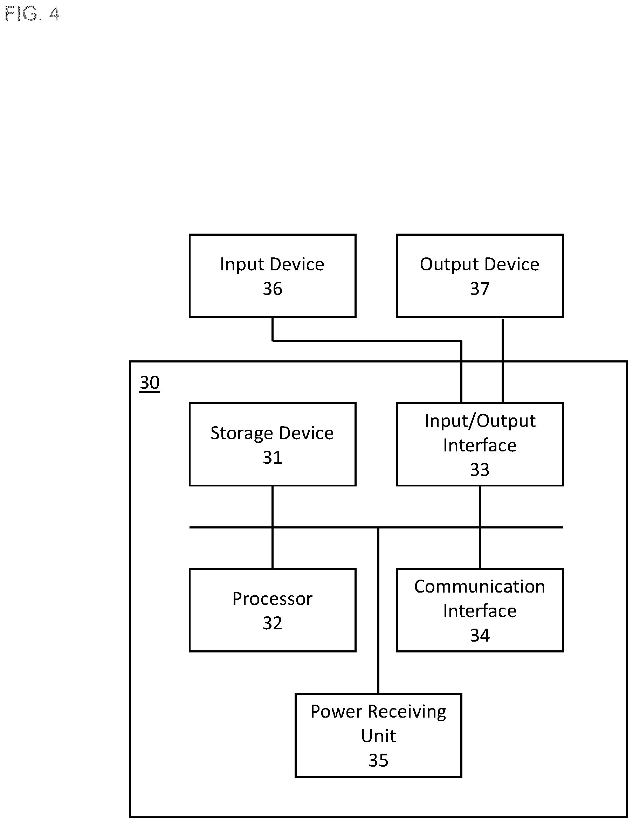

A configuration of the protection object according to the present embodiment will be described. FIG. 4 is a block diagram illustrating a configuration of the protection object according to the present embodiment.

As shown in FIG. 4, the protection object 30 includes a storage device 31, a processor 32, an input/output interface 33, a communication interface 34, and a power receiving unit 35. The protection object 30 is connectible to at least one of an input device 36 and an output device 37.

The storage device 31 is configured to store a program and data. The storage device 31 is, for example, a combination of ROM, RAM, and a storage (e.g., a flash memory or a hard disk).

The program includes, for example, the following program:
· A program of an OS; and
· A program of an application for executing information processing.

The data includes, for example, the following data:
· A database to be referred to in information processing; and
· Execution result of information processing.

The processor 32 is configured to realize functions of the protection object 30 by activating a program stored in the storage device 31. The processor 32 is an example of the computer.

The input/output interface 33 is configured to acquire a signal (for example, an instruction from a user, sensing data, or a combination thereof) from the input device 36 to be connected to the protection object 30. In addition, the input/output interface 33 is configured to output a signal (e.g., a control signal, an image signal, or a combination thereof) to the output device 37 to be connected to the protection object 30.

The input device 36 may be, for example, a keyboard, a pointing device, a touch screen, a sensor (e.g., a posture sensor), or a combination thereof.

The posture sensor may include, for example, at least one of the following:
· An acceleration sensor;
· An angular velocity sensor; and
· A magnetic sensor.

The output device 37 is, for example, a display.

The communication interface 34 is configured to control communication between the protection object 30 and an external apparatus (e.g., the antitheft apparatus 10). As an example, the communication interface 34 transmits sensing data to the external apparatus.

For example, the communication interface 34 is a wireless communication module supporting at least one system of Bluetooth, ZigBee, specified low-power radio communication, and a wireless LAN.

The power receiving unit 35 is configured to receive the power transmission beam emitted into space by the power transmitting unit 15 to obtain power.

More specifically, the power receiving unit 35 includes an antenna and a power converter.

The antenna receives a power-supplying electromagnetic wave (a power transmission beam) that propagates through the space.

The power converter converts the power-supplying electromagnetic wave received by the antenna into (direct current) power.

When the power-supplying electromagnetic wave is a microwave, the antenna and the power converter may be a rectenna. When the power-supplying electromagnetic wave is a light wave, the antenna and the power converter may be a photoelectric converter.

The power receiving unit 35 may include a planar antenna or a linear antenna. The plurality of antennas may be arranged in an array, in a matrix, or in different manners.

The plurality of antennas form a power reception surface (which may also be referred to as an aperture surface). The power reception surface corresponds to a portion of the power receiving unit 35 that takes charge of receiving the power transmission beam. The power reception surface depends on the configuration of the power receiving unit 35 (e.g., the size, shape, arrangement, and number of the antenna). As an example, a rectangular power reception surface including all the antennas provided for the power receiving unit 35 may be defined. The power reception surface may be an effective aperture surface based on radio wave characteristics of the power receiving unit 35.

Further, the protection object 30 includes a battery (not shown). The battery supplies power to each unit of the protection object 30. The battery can be charged with the power that is obtained by the power receiving unit 35.

### (2) Overview of Embodiment

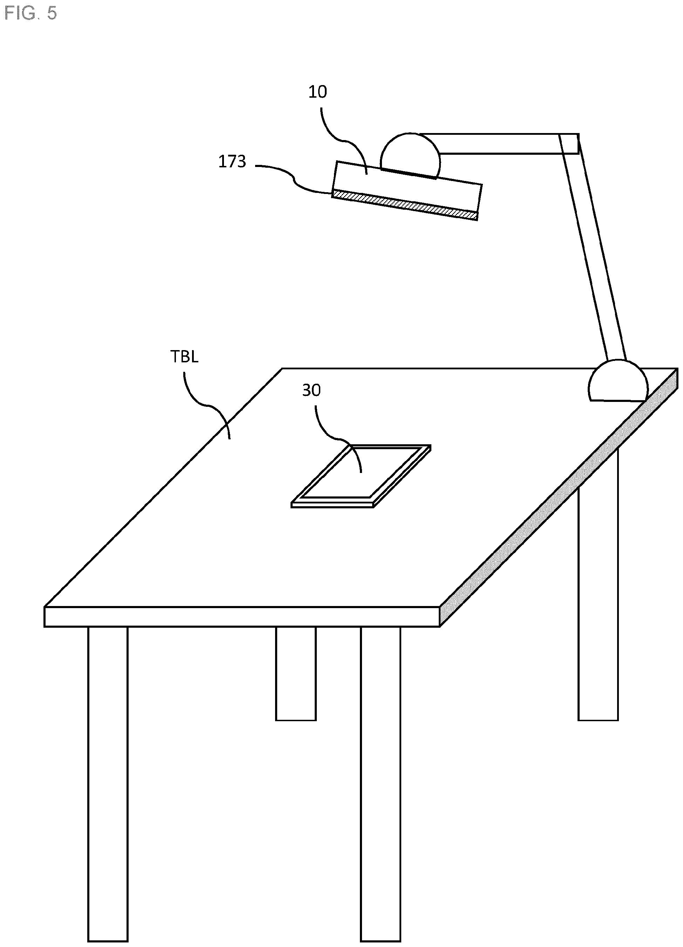

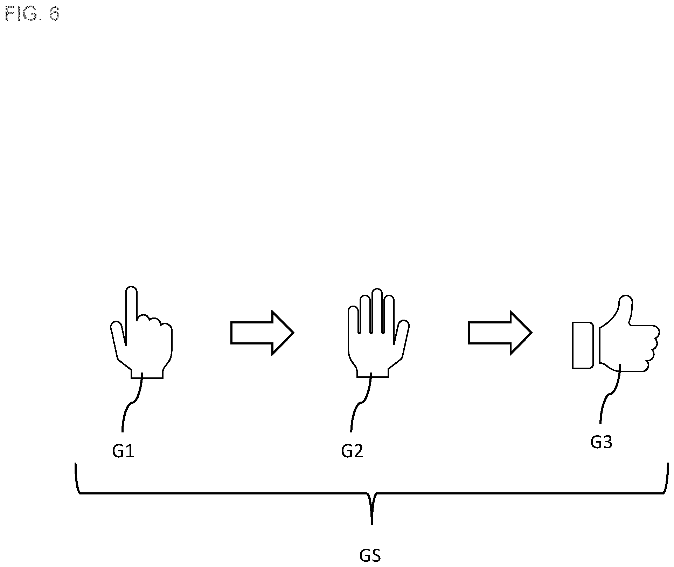

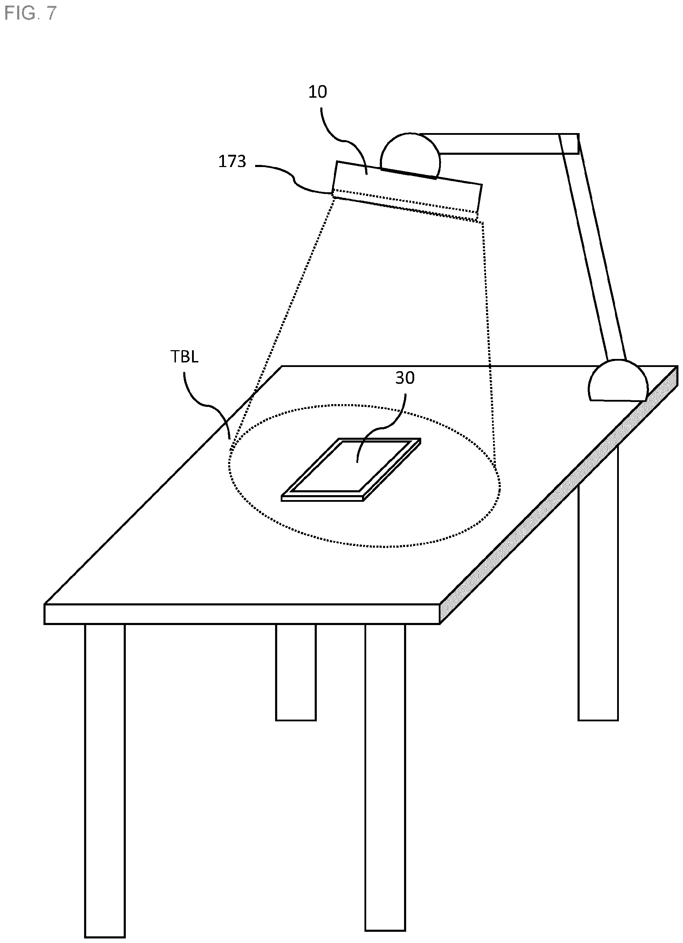

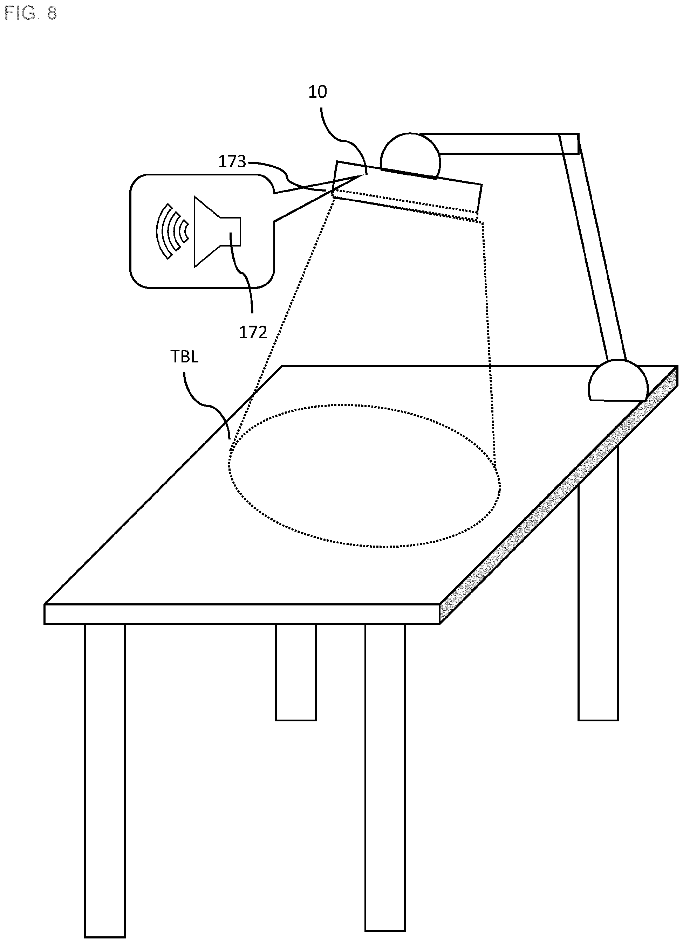

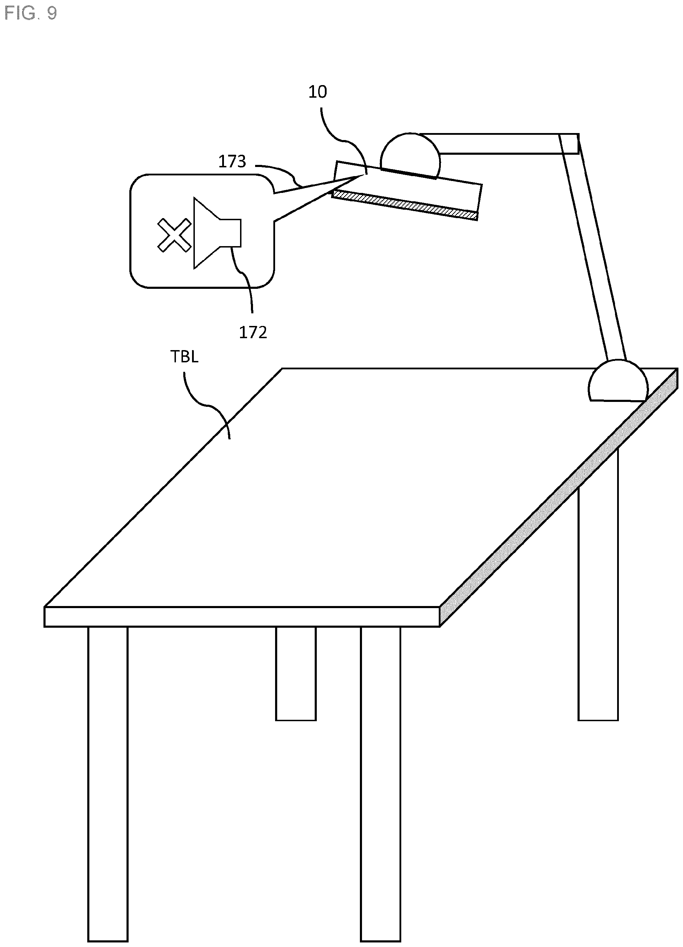

An overview of the present embodiment will be described. FIG. 5 is a diagram showing an example application of the antitheft apparatus according to the present embodiment. FIG. 6 is a diagram showing an example of a gesture set for enabling/disabling an alert mode. FIG. 7 is a diagram showing an example behavior of an indicator when the alert mode is enabled. FIG. 8 is a diagram showing an example behavior of an alarm device when the alert mode is enabled and a movement of the protection object is detected. FIG. 9 is a diagram showing an example behavior of the alarm device when the alert mode is disabled and a movement of the protection object is detected.

As shown in FIG. 5, the antitheft apparatus 10 is mounted on a table TBL installed in, for example, a restaurant, a library, a co-working space, or the like. The protection object 30 is also placed on the table TBL. Typically, the positions and postures of the antitheft apparatus 10 and the camera are set to look down on the protection object 30.

Although the antitheft apparatus 10 is supported by an arm in the example of FIG. 5, the antitheft apparatus 10 may be installed in a manner different from that shown in FIG. 5. As an example, the antitheft apparatus 10 may be attached to a structure such as a ceiling, a wall, a column, or a window.

The antitheft apparatus 10 operates in accordance with a combination of enabling/disabling of the alert mode and enabling/disabling of the power supply mode. In the example of FIG. 5, the antitheft apparatus 10 has the alert mode disabled but the power supply mode in any state (i.e., enabled or disabled). The antitheft apparatus 10 keeps the indicator 173 off while the alert mode is disabled. Accordingly, the user of the protection object 30 can recognize that the alert mode of the antitheft apparatus 10 is disabled.

The user of the protection object 30 can instruct the enabling/disabling of the alert mode of the antitheft apparatus 10. As an example, the user instructs enabling/disabling of the alert mode of the antitheft apparatus 10 by using a gesture set including one or more specific gestures. As shown in FIG. 6, the gesture set GS is, for example, a permutation of a plurality of hand gestures. The gesture constituting the gesture set is not limited to a hand gesture. In addition, the gesture set may be a combination of a plurality of gestures (not in particular order). However, it is preferable for the gesture set to be a permutation of as many gestures as possible, from a security improvement point of view.

The user of the protection object 30, when temporarily leaving the table TBL, can instruct the antitheft apparatus 10 to enable the alert mode of the antitheft apparatus 10. When the alert mode is enabled, the antitheft apparatus 10 causes the indicator 173 to emit light, for example, as shown in FIG. 7. Accordingly, the user of the protection object 30 can recognize that the alert mode of the antitheft apparatus 10 is enabled.

The antitheft apparatus 10 monitors the taking of the protection object 30 while the user is absent. As shown in FIG. 8, when the antitheft apparatus 10 detects the taking of the protection object 30, the antitheft apparatus 10 causes the alarm device 172 to output an alarm (e.g., output a sound from a speaker). Therefore, the user can leave the table TBL without anxiety with the protection object 30 left on the table TBL. That is, it is not necessary to remove the protection object 30 from the table TBL, carry the protection object 30, and prepare the protection object 30 on the table TBL again. In addition, when the protection object 30 is provided with the wireless power supply service (that is, the power supply mode of the antitheft apparatus 10 is enabled), the battery of the protection object 30 can be charged at an early stage by continuing the wireless power supply even while the user is absent.

When the user of the protection object 30 returns to the table TBL, the user instructs the antitheft apparatus 10 to disable the alert mode of the antitheft apparatus 10. When the alert mode is enabled, the antitheft apparatus 10 causes the indicator 173 to turn off, for example, as shown in FIG. 5. Accordingly, the user of the protection object 30 can recognize that the alert mode of the antitheft apparatus 10 is disabled. As shown in FIG. 9, when the alert mode is disabled, the antitheft apparatus 10 does not operate the alarm device 172 regardless of the state of the protection object 30, unlike the example shown in FIG. 8. Accordingly, the user can remove the protection object 30 from the table TBL without operating the alarm device 172.

### (3) Database

A database according to the present embodiment will be described. The following databases are stored in the storage device 11.

### (3-1) User Database

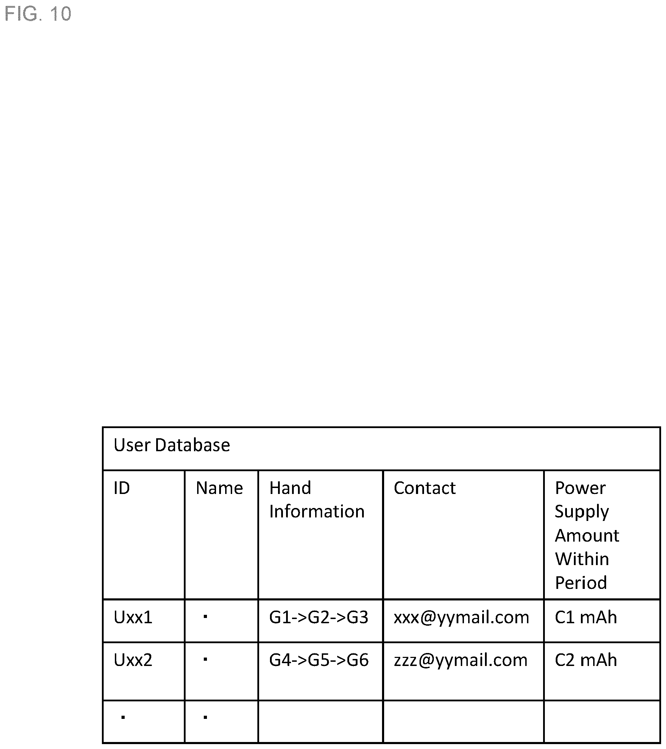

A user database according to the present embodiment will be described. FIG. 10 is a diagram showing a data structure of the user database according to the present embodiment.

The user database stores user information. The user information is information related to the user of the protection object 30.

As shown in FIG. 10, the user database includes an "ID" field, a "Name" field, a "Hand information" field, a "Contact" field, and a "Power supply amount within period" field.

The "ID" field stores user ID information. The user ID information is information for identifying the user of the protection object 30.

The "Name" field stores user name information. The user name information is information related to a user name of the protection object 30. The user name may be a nickname of the user or a real name of the user.

The "Hand information" field stores hand information of the user of the protection object 30. The hand information is information related to a hand of a person (user). The hand information may include, for example, at least one of the following:
·Information related to one or more gestures represented by a hand of a person (hand gestures);
·Information related to biological features of a hand of a person (e.g., skeleton, wrinkles, lines on a palm, veins, or a combination thereof).

The hand information of the user of the protection object 30 may be registered, for example, upon the first use of a wireless power supply service or an antitheft service. When the hand information includes information related to a gesture, the gesture may be designated by the user or may be determined by the antitheft apparatus 10 or a host system thereof. When at least a part of one or more gestures designated by the user corresponds to a gesture that is easily guessed by a third party or a gesture that is unconsciously used by the user, the antitheft apparatus 10 may provide the user with notification about the gesture. This can encourage the user to change the registered gesture to prevent a third party from disabling the alert mode or the user from inadvertently enabling/disabling the alert mode. Alternatively, the antitheft apparatus 10 may reject the registration of such a gesture.

Two or more of the hand information that is a trigger for disabling the alert mode, the hand information that is a trigger for enabling the alert mode, and the hand information that is a trigger for enabling the power supply mode may be the same. This can reduce the number of pieces of hand information that the user of the protection object 30 needs to memorize.

In particular, the hand information that is a trigger for enabling the power supply mode may be reused as the hand information that is a trigger for disabling the alert mode or the hand information that is a trigger for enabling the alert mode. This allows the user of the protection object 30 to register the hand information for controlling the alert mode of the antitheft apparatus 10 without additional work, simply by registering the hand information for enabling the power supply mode at the start of using the wireless power supply service.

However, any authentication information may be used instead of the hand information. For example, the authentication information may include at least one of the following:
·Information related to one or more gestures represented by a part other than a hand of a person;
·Biometric information related to a part other than a hand of a person;
·A passcode (e.g., a permutation of at least one of a character, a number, or a symbol) (an example of "code information");
·Imaged code (e.g., two-dimensional barcode) (an example of "code information").

The "Contact" field stores contact information. The contact information is information related to a user contact for the protection object 30. The contact information includes, for example, at least one of the following:
·Mail address;
·Social networking service (SNS) account information;
·Telephone number.

The "Power supply amount within period" field stores information on a power supply amount within a period. The power supply amount within period information is information related to the amount of power supplied by the user of the protection object 30 through the use of the wireless power supply service within a predetermined compilation period (e.g., one month). The power supply amount within period information can be used to calculate the amount of money that the provider of the wireless power supply service will charge the user.

### (3-2) Protection Object Database

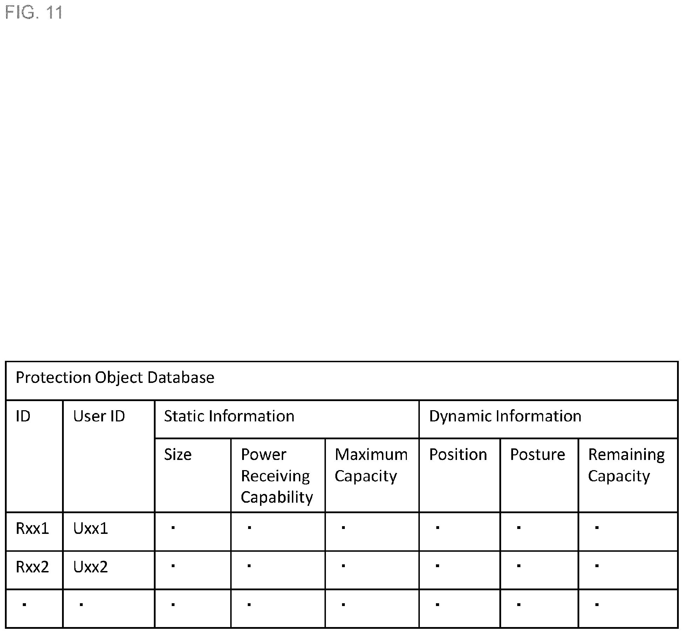

A protection object database according to the present embodiment will be described. FIG. 11 is a diagram showing a data structure of the protection object database according to the present embodiment.

The protection object database stores protection object information. The protection object information is information related to the protection object 30.

As shown in FIG. 11, the protection object database includes an "ID" field, a "User ID" field, a "Static information" field, and a "Dynamic information" field. The fields are associated with each other.

The "ID" field stores a protection object ID. The protection object ID is information for identifying the protection object 30.

The "User ID" field stores a user ID. The user ID is a foreign key that uniquely identifies a related record in the user database (FIG. 10).

The "Static information" field stores static information of the protection object 30. The static information for the protection object 30 is information on the attribute or state of the protection object 30 that is not expected to change from the start to the end of the provision of the wireless power supply service. As an example, the static information is a size of the power reception surface, a shape of the power reception surface, a power receiving capability of the power receiving unit 35, and a maximum capacity of the battery.

The size of the power reception surface represents an actual size of the power reception surface. For example, the size of the power reception surface may include at least one of the following:
· A length of a part or the whole of a contour line defining the power reception surface (e.g., a length of a side of the power reception surface, or a total length of the power reception surface);
· A length between two points on the contour line defining the power reception surface (e.g., a length of a diagonal line of the power reception surface, a radius of the power reception surface, a length of a major axis of the power reception surface, or a length of a minor axis of the power reception surface);
· An area surrounded by the contour line defining the power reception surface.

The power receiving capability of the power receiving unit 35 includes, for example, at least one of the following:
· A size of the power reception surface;
· A shape of the power reception surface;
· A power range in which the power receiving unit 35 can receive power;
· A frequency that the power receiving unit 35 can receive;
· A type of polarized electromagnetic radiation that the power receiving unit 35 can receive.

The power receiving capability of the power receiving unit 35 may be categorized as a power receiving class.

The shape of the power reception surface indicates a geometric shape of the power reception surface. The shape of the power reception surface is, for example, a combination of any curves (e.g., a circle or an ellipse), a combination of any straight lines (e.g., a polygon), or a combination of any curve and straight line (e.g., a sector).

The "Dynamic information" field stores dynamic information for the protection object 30. The dynamic information for the protection object 30 is information on the attribute or state of the protection object 30 that is expected to change from the start to the end of the provision of the wireless power supply. As an example, the dynamic information is a position of the power reception surface, a posture of the power reception surface, and a remaining battery capacity. When the protection object 30 moves or rotates during the period from the start to the end of the wireless power supply, at least one of the position of the power reception surface and the posture of the power reception surface changes. The remaining battery capacity of the protection object 30 continues to increase from the start to the end of the wireless power supply.

The position of the power reception surface indicates a relative position of the power reception surface with respect to the power transmission surface. For example, the position of the power reception surface may include at least one of the following:
· Coordinates of one or more reference points on the contour line defining the power reception surface (e.g., a vertice) ;
· Coordinates of one or more reference points located inside the power reception surface (e.g., at least one of a center point and a center of gravity).

The posture of the power reception surface indicates a relative direction of the power reception surface with respect to a reference surface (e.g., a horizontal surface or the power transmission surface). As an example, the posture of the power reception surface is an inclination (e.g., at least one of a roll angle, a pitch angle, and a yaw angle of the power reception surface) of the power reception surface with respect to the reference surface.

### (4) Processing

Processing according to the present embodiment will be described.

### (4-1) Power Supply Start Processing

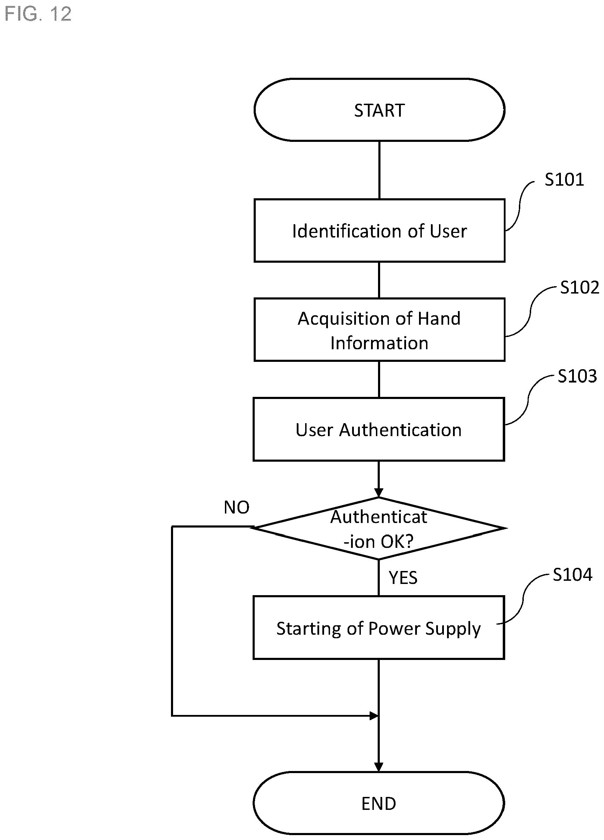

Power supply start processing according to the present embodiment will be described. FIG. 12 is a flowchart for the power supply start processing according to the present embodiment.

The power supply start processing of FIG. 12 starts in response to the satisfaction of any one of the following start conditions:
· The antitheft apparatus 10 has received a power supply request from the protection object 30;
· The antitheft apparatus 10 has received a power supply request from a communication apparatus (e.g., another communication apparatus operated by the user of the protection object 30) other than the protection object 30;
· A predetermined date and time has come.

As shown in FIG. 12, the antitheft apparatus 10 executes identification of the user (S101).

More specifically, the processor 12 identifies the user of the protection object 30 (that is, the target power reception apparatus) which is targeted for the wireless power supply.

In a first example, the processor 12 refers to the user ID included in the power supply request received from the protection object 30 or another communication apparatus, and identifies the user identified by the user ID.

In a second example, the processor 12 refers to the protection object ID included in the power supply request received from the protection object 30 or another communication apparatus, and identifies the user identified by the user ID associated with the protection object ID in the protection object database (FIG. 11).

In a third example, the processor 12 identifies the user associated with the start date and time of the power supply start processing of FIG. 12 (i.e., the user who has reserved the use of the wireless power supply service).

After step S101, the antitheft apparatus 10 executes acquisition of the hand information (S102).

More specifically, the processor 12 acquires hand information (an example of "second event information related to a power supply mode") used for user authentication for starting wireless power supply to the protection object 30.

In a first example, the processor 12 acquires an image of the user from a camera via the input/output interface 13. Here, the processor 12 may control at least one of the position or the posture of the camera as needed. When the hand information is a gesture set consisting of hand gestures, the processor 12 acquires an image of the user's hand. The processor 12 analyzes the image, thereby extracting the hand information.

In a second example, the processor 12 acquires an image of the user from the protection object 30 or another communication apparatus via the communication interface 14. The processor 12 analyzes the image, thereby extracting the hand information.

In a third example, the processor 12 acquires the hand information transmitted from the protection object 30 or another communication apparatus via the communication interface 14.

After step S102, the antitheft apparatus 10 executes user authentication (S103).

More specifically, the processor 12 determines whether the hand information acquired in step S102 matches the hand information of the user identified in step S101 (hereinafter, referred to as "correct hand information"). As an example, the processor 12 refers to the user database (FIG. 11) to identify the correct hand information.

If the user authentication in step S103 is successful, the antitheft apparatus 10 executes starting of power supply (S104).

More specifically, the processor 12 enables the power supply mode of the antitheft apparatus 10. As an example, the processor 12 can perform at least one of the following:
· Identify the static information related to the power reception surface;
· Identify the dynamic information related to the power reception surface;
· Generate a control parameter related to beamforming (e.g., a beam excitation condition);
· Instruct the power transmitting unit 15 to emit a power transmission beam.

The control parameter determines an emission direction and a beam shape of the power transmission beam.

The control parameter may be generated to be dependent on at least one of the static information or the dynamic information related to the power reception surface. In this case, the processor 12 generates the control parameter such that the power transmission beam emitted from the power transmitting unit 15 is focused on a spot suitable for the size of the power reception surface, the shape of the power reception surface, and the posture of the power receiving surface at the position of the power receiving surface. In a first example, the processor 12 generates the control parameter such that the intensity of the power transmission beam will be half (i.e., a half-value) of the maximum value at at least part of the edge (i.e., side or vertex) of the power reception surface. In a second example, the processor 12 generates the control parameter such that the intensity of the power transmission beam will be null (i.e., zero value) at at least a portion of the edge of the power reception surface.

With the end of step S104, the antitheft apparatus 10 ends the power supply start processing of FIG. 12.

If the user authentication in step S103 fails, the antitheft apparatus 10 ends the power supply start processing of FIG. 12. In this case, the power supply mode of the antitheft apparatus 10 will not be enabled. Alternatively, if the user authentication in step S103 fails, the antitheft apparatus 10 may execute the acquisition of the hand information (S102) again.

### (4-2) Standby Processing

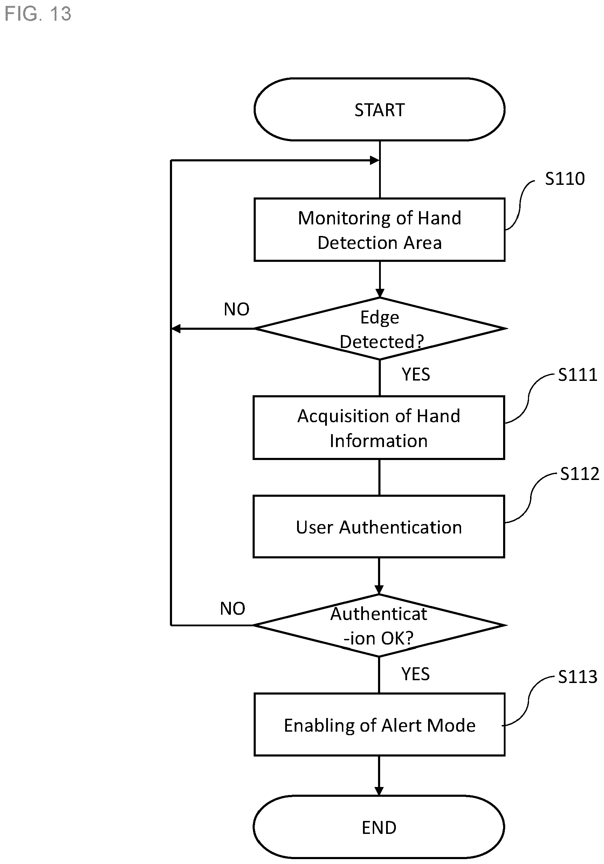

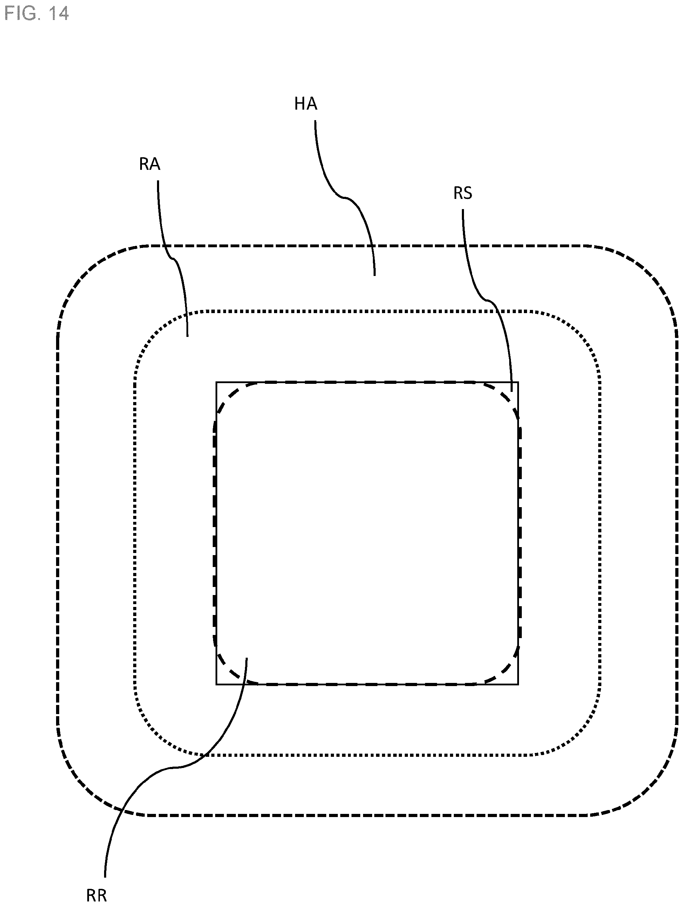

Standby processing according to the present embodiment will be described. FIG. 13 is a flowchart for the standby processing according to the present embodiment. FIG. 14 is an explanatory diagram of a hand detection area and a no-entry area according to the present embodiment.

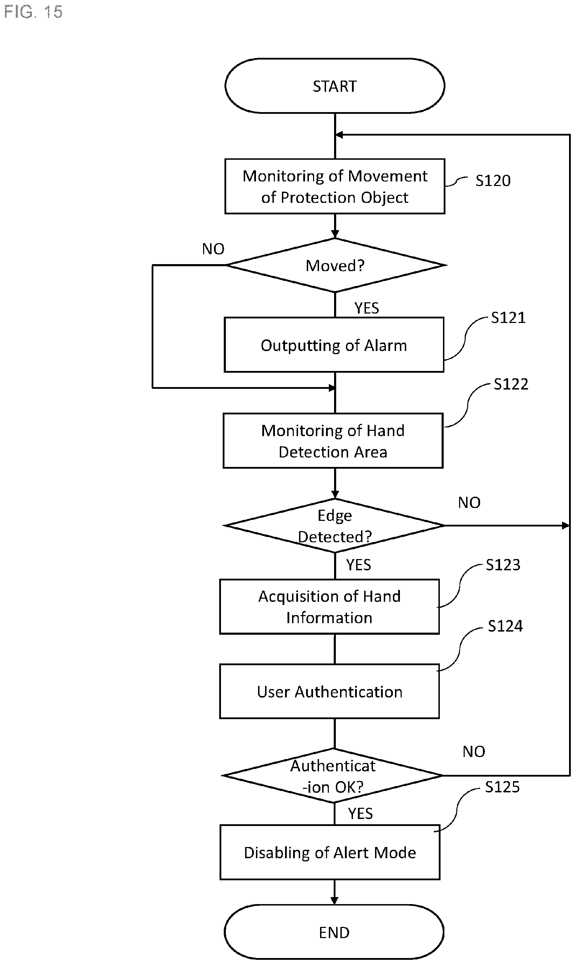

The standby processing of FIG. 13 starts in response to the satisfaction of any one of the following start conditions:
· The power supply mode of the antitheft apparatus 10 has been enabled (that is, step S104 of FIG. 12 has been executed);
· In antitheft processing of FIG. 15 (to be described later), the alert mode of the antitheft apparatus 10 has been disabled (that is, step S125 has been executed);
· The antitheft apparatus 10 has recognized the protection object 30 from, for example, an image captured by a camera;
· A predetermined date and time has come.

As shown in FIG. 13, the antitheft apparatus 10 executes monitoring of the hand detection area (S110).

More specifically, the processor 12 acquires an image showing a state of the hand detection area (an example of a "predetermined area") (i.e., an image captured so as to include the hand detection area) from the camera via the input/output interface 13. Here, the processor 12 may control at least one of the position or the posture of the camera as needed to capture the hand detection area. The processor 12 performs an edge analysis on the acquired image data, thereby obtaining edge information. The processor 12 refers to the edge information and monitors an edge of a moving object (a biological body (in particular, a hand of a person) or an object).

The hand detection area is an area for the antitheft apparatus 10 to detect the user's hand. The hand detection area is defined in the periphery of the protection object 30. For example, the antitheft apparatus 10 may turn on the light source 171 to allow the user to recognize a range illuminated by the light source 171 as the hand detection area.

As an example, as shown in FIG. 14, the power transmission beam emitted by the power transmitting unit 15 of the antitheft apparatus 10 is received in a power receivable range RR of the power reception surface RS of the protection object 30. An area where a biological body or an object is radiated with high electric power is created in a periphery of a path of the power transmission beam PTB (for example, in a periphery of the power receivable range RR). An area where electric power received by a human body from the power transmission beam may possibly equal or exceed a threshold is defined as a no-entry area RA. The threshold is specified based on, for example, "The Protection Policy for the Human Body from Effects of Radio Waves Use". A hand detection area HA is defined in the periphery of the no-entry area RA. In other words, the no-entry area RA is defined closer to the protection object 30 than the hand detection area HA. This allows the antitheft apparatus 10 to acquire the user's hand information in the hand detection area HA in front of the no-entry area RA before the user's hand enters the no-entry area RA and stops the power transmission beam. The hand detection area HA can be defined using at least one of the following as a reference:
· Received power;
· Distance from no-entry area RA; and
· Photographic range of a camera.

However, even if the antitheft apparatus 10 finds an edge of a stationary object in the hand detection area HA, the antitheft apparatus 10 can ignore the edge. By registering position information of an edge of the stationary object existing in the hand detection area HA as a whitelist before start of wireless power supply, the antitheft apparatus 10 can determine whether an edge found inside the hand detection area HA during the wireless power supply can be ignored. Alternatively, the antitheft apparatus 10 may recognize a moving object or a stationary object from an image through image recognition processing. This makes it possible to determine whether an edge found in the hand detection area HA is an edge of the moving object.

The edge information is information related to an edge in an image. The edge is a change point of a brightness of an image (for example, a point where a first order differential of a space function of brightness has a local maximum or a local minimum or a point where a second order differential of the space function of brightness crosses zero) .

The processor 12 turns on the light source 171 so as to illuminate the hand detection area at least at the time of being photographed by the camera, whereby a difference in brightness between the monitoring object (e.g., a hand of a person) and a periphery thereof can be increased and an edge of the monitoring object can be more accurately identified. In particular, the light source 171 illuminates the hand detection area such that the inside and the outside of the hand detection area can be distinguished (e.g., by the amount of light or the color of light), thereby allowing the user of the protection object 30 to perceive a location where the hand is to be presented (i.e., the hand detection area).

The antitheft apparatus 10 repeatedly executes the monitoring of the hand detection area (S110) until the edge is detected or the standby processing of FIG. 13 ends.

If the edge is detected in step S110, the antitheft apparatus 10 executes acquisition of the hand information (S111).

More specifically, the processor 12 refers to the image acquired in step S110 to acquire the hand information (an example of "first event information related to an alert mode"). As an example, the processor 12 analyzes the image, thereby generating the hand information.

After step S111, the antitheft apparatus 10 executes user authentication (S112).

More specifically, the processor 12 authenticates the user of the protection object 30 by determining whether the hand information acquired in step S111 matches the correct hand information. As an example, the processor 12 refers to the user database (FIG. 11), thereby identifying the correct hand information corresponding to the user of the protection object 30.

If the user authentication in step S112 is successful, the antitheft apparatus 10 executes enabling of the alert mode (S113).

More specifically, the processor 12 enables the alert mode of the antitheft apparatus 10. Further, the processor 12 may modify the visual information to be output by the indicator 173.

With the end of step S113, the antitheft apparatus 10 ends the standby processing of FIG. 13.

If the user authentication in step S112 fails, the antitheft apparatus 10 executes monitoring of the hand detection area (S110) .

### (4-3) Antitheft Processing

Standby processing according to the present embodiment will be described. FIG. 15 is a flowchart for the antitheft processing according to the present embodiment.

The antitheft processing of FIG. 15 starts in response to the satisfaction of any one of the following start conditions:
· In the standby processing of FIG. 13, the alert mode of the antitheft apparatus 10 has been enabled (that is, step S113 has been executed);
· The antitheft apparatus 10 has recognized the protection object 30 from, for example, an image captured by a camera;
· A predetermined date and time has come.

As shown in FIG. 15, the antitheft apparatus 10 executes monitoring of the movement of the protection object (S120) .

More specifically, the processor 12 acquires an image from a camera via the input/output interface 13. Here, the processor 12 may control at least one of the position or the posture of the camera as needed. The processor 12 analyzes the acquired image, thereby determining whether the protection object 30 has moved. As an example, the processor 12 can determine that the protection object 30 has moved when at least one of the following conditions is satisfied:
- There is no protection object 30 in the image;
- Compared to the image acquired in the past, the position of the protection object 30 has changed; and
- The protection object 30 is outside a predetermined area.

Alternatively, the antitheft apparatus 10 may determine that the protection object 30 has moved when the connection to the protection object 30 is broken.

If the movement of the protection object 30 is detected in step S120, the antitheft apparatus 10 executes outputting of an alarm (S121).

More specifically, the processor 12 causes the alarm device 172 to output an alarm for stimulating a sense of, for example, a person in the periphery of the alarm device 172 or the user of the protection object 30. For example, the processor 12 can perform at least one of the following:
· Causing the alarm device 172 that is a speaker to output an alarm by sound (e.g., warning voice or an alarm sound);
· Causing the alarm device 172 that is a light source or a lamp to output an alarm by light;
· Causing the alarm device 172 that is a display to output an alarm screen;
· Causing the alarm device 172 that is a vibration apparatus to output an alarm by vibration;
· Causing a communication apparatus (corresponding to the alarm device 172) carried by the user of the protection object 30 to output an alarm by sound, an alarm by light, an alarm screen, an alarm by vibration, or an alarm message; and
· Sending an alarm message to a contact identified by the contact information stored in the user database (FIG. 10).

If the movement of the protection object 30 is not detected in step S120, or after step S121, the antitheft apparatus 10 executes monitoring of the hand detection area (S122).

More specifically, the processor 12 acquires an image showing the state of the hand detection area from a camera via the input/output interface 13. Here, the processor 12 may control at least one of the position or the posture of the camera as needed to capture the hand detection area. The processor 12 performs an edge analysis on the acquired image data, thereby obtaining edge information. The processor 12 refers to the edge information and monitors an edge of a biological body or an object.

The processor 12 turns on the light source 171 so as to illuminate the hand detection area at least at the time of being photographed by the camera, whereby a difference in brightness between the monitoring object (e.g., a hand of a person) and a periphery thereof can be increased and an edge of the monitoring object can be more accurately identified. In particular, the light source 171 illuminates the hand detection area such that the inside and the outside of the hand detection area can be distinguished (e.g., by the amount of light or the color of light), thereby allowing the user of the protection object 30 to perceive a location where the hand is to be presented (i.e., the hand detection area).

If the edge is detected in step S122, the antitheft apparatus 10 executes acquisition of the hand information (S123).

More specifically, the processor 12 refers to the image acquired in step S122 to acquire the hand information (an example of "first event information related to an alert mode"). As an example, the processor 12 analyzes the image, thereby generating the hand information.

After step S123, the antitheft apparatus 10 executes user authentication (S124).

More specifically, the processor 12 authenticates the user of the protection object 30 by determining whether the hand information acquired in step S123 matches the correct hand information. As an example, the processor 12 refers to the user database (FIG. 11), thereby identifying the correct hand information corresponding to the user of the protection object 30.

If the user authentication in step S124 is successful, the antitheft apparatus 10 executes disabling of the alert mode (S125).

More specifically, the processor 12 disables the alert mode of the antitheft apparatus 10. Further, the processor 12 may modify the visual information to be output by the indicator 173.

Here, when the alarm device 172 is outputting an alarm with the alert mode determined to be disabled, the processor 12 stops outputting the alarm. Accordingly, even if the user of the protection object 30 accidentally triggers the alarm device 172, the outputting of the alarm can be stopped immediately.

With the end of step S125, the antitheft apparatus 10 ends the antitheft processing of FIG. 15.

If the user authentication in step S124 fails, the antitheft apparatus 10 executes monitoring the movement of the protection object (S120).

If the edge is not detected in step S122, the antitheft apparatus 10 executes monitoring of the movement of the protection object (S120).

### (4-4) Power Supply Control Processing

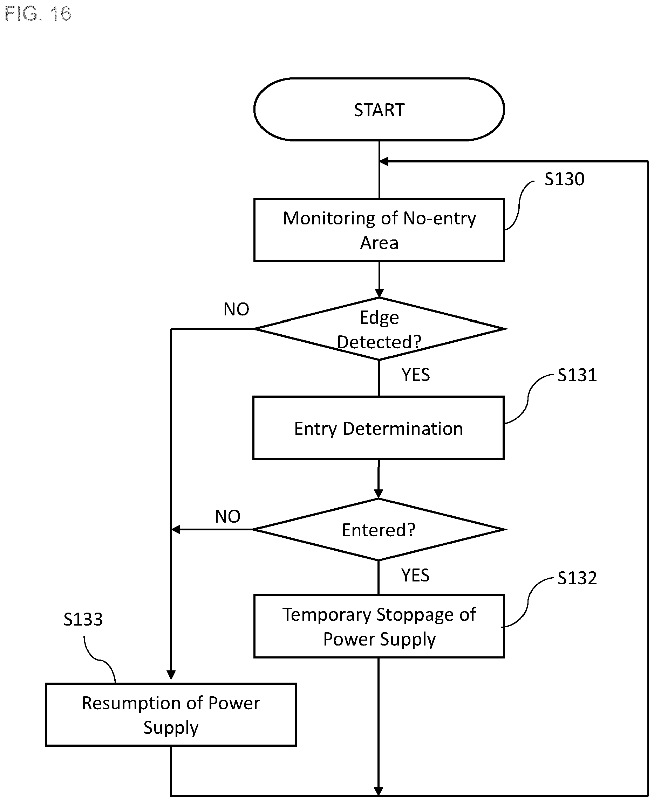

Power supply control processing according to the present embodiment will be described. FIG. 16 is a flowchart for the power supply control processing according to the present embodiment.

The power supply control processing of FIG. 16 starts in response to the satisfaction of any one of the following start conditions:
· The power supply mode of the antitheft apparatus 10 has been enabled (that is, step S104 of FIG. 12 has been executed);
· A predetermined date and time has come.

As shown in FIG. 16, the antitheft apparatus 10 executes monitoring of the no-entry area (S130).

More specifically, the processor 12 acquires an image showing a state of the no-entry area (i.e., an image obtained by capturing a range including the no-entry area) from the camera via the input/output interface 13. Here, the processor 12 may control at least one of the position or the posture of the camera as needed to capture the no-entry area. The processor 12 performs an edge analysis on the acquired image data, thereby obtaining edge information. The processor 12 refers to the edge information and monitors an edge of a biological body or an object.

The processor 12 turns on the light source 171 so as to illuminate the no-entry area at least at the time of being photographed by the camera, whereby a difference in brightness between the monitoring object and a periphery thereof can be increased and an edge of the monitoring object can be more accurately identified.

If the edge is detected in step S130, the antitheft apparatus 10 executes an entry determination (S131).

More specifically, the processor 12 refers to the edge information (for example, a position of an edge) obtained in step S130 to determine whether a biological body or an object has entered the no-entry area.

As an example, when the antitheft apparatus 10 finds an edge in the no-entry area, the antitheft apparatus 10 determines that the edge has appeared due to a biological body or an object having entered the no-entry area (in other words, the antitheft apparatus 10 determines that a biological body or an object has entered the no-entry area).

However, even if the antitheft apparatus 10 finds an edge of a predetermined object in the no-entry area, the antitheft apparatus 10 can ignore the edge. For example, the predetermined object is the protection object 30 and property (such as a table, eating utensils, food or beverages, a menu, or a book) that need not be protected from radio waves. When the predetermined object is a stationary object that is present in the no-entry area, for example, by registering position information of an edge of the stationary object as a whitelist before start of wireless power supply, the antitheft apparatus 10 can determine whether an edge found inside the no-entry area during the wireless power supply can be ignored. Alternatively, the antitheft apparatus 10 may recognize at least one of the predetermined object or another biological body or an object (in other words, a biological body or an object that needs to be protected from radio waves) from an image through image recognition processing. Accordingly, it is possible to determine which object or biological body an edge found in the no-entry area belongs to.

In particular, using edge information enables a positional relationship between a biological body or an object and the no-entry area to be accurately comprehended. Therefore, even when the biological body or the object and the protection object 30 coexist in a limited space, wireless power supply can be performed in a proactive manner as long as the biological body or the object is at a safe position, but when the biological body or the object erroneously enters the no-entry area, the event can be accurately detected and the power transmission beam can be stopped.

When the antitheft apparatus 10 determines in step S131 that a biological body or an object has entered the no-entry area, the antitheft apparatus 10 executes temporary stoppage of the power supply (S132).

More specifically, the processor 12 causes the power transmitting unit 15 to temporarily stop radiation of the power transmission beam. This can prevent the biological body (e.g., a hand of a person) or the object from being radiated with a high-power transmission beam.

After step S132, the antitheft apparatus 10 executes monitoring of the no-entry area (S130).

If the edge is not detected in step S130, or if it is determined in step S132 that a biological body or an object has not entered the no-entry area, resumption of the power supply is executed (S133).

More specifically, the processor 12 resumes the radiation of the power transmission beam by the power transmitting unit 15.

However, the antitheft apparatus 10 omits the resumption of the power supply (S133) if the radiation of the power transmission beam by the power transmitting unit 15 has not been stopped.

After step S133, the antitheft apparatus 10 executes monitoring of the no-entry area (S130).

When end conditions are satisfied, the antitheft apparatus 10 ends the power supply control processing (FIG. 16). For example, the end conditions may be at least one of the following. Whether the end conditions are satisfied may be determined at a predetermined timing or the end conditions may be determined to be satisfied in accordance with an occurrence of an interrupt event.
· A capacity of the battery of the protection object 30 has reached a threshold (for example, full charge) (e.g., information received from the protection object 30 is referred to)
· The protection object 30 can no longer be detected (for example, wireless connection to the protection object 30 has been broken)
· A power transmission end request has been received from another communication apparatus operated by the protection object 30 or the user
· A vibration of the protection object 30 has been detected (the protection object 30 can transmit a vibration detection signal when a vibration sensor installed in the protection object 30 detects a vibration of the protection object 30)
· A power transmission end signal is received (for example, from a remote controller (not illustrated))
· A predetermined amount of time has elapsed from start of wireless power supply
· Another power reception apparatus with a higher power transmission priority than the protection object 30 has become active in a same power transmission area

Here, the power transmission area refers to an area in which the antitheft apparatus 10 provides wireless power supply. The power transmission priority is an index used by the antitheft apparatus 10 to determine the target power reception apparatus from a plurality of active power reception apparatuses (which may include the protection object 30). For example, the power transmission priority can be determined based on a remaining battery life of the power reception apparatus, history of use by a user with respect to the power reception apparatus, or a combination thereof. The power reception apparatus having become active means that the power reception apparatus is in a wait state for wireless power supply. For example, the power reception apparatus can become active as a trigger when the power reception apparatus changes to a state (a position or a posture) that enables the power reception apparatus to receive power, when the power reception apparatus changes to a communicable state, or when the remaining battery life of the power reception apparatus 30 drops to or below a threshold.

Let us assume that a first power reception apparatus (for example, a smartphone) and a second power reception apparatus (for example, a laptop computer) are present in a same power transmission area and that wireless power supply to the first power reception apparatus is being performed. When the remaining battery life of the second power reception apparatus becomes depleted due to use of the second power reception apparatus by a user, the power transmission priority of the second power reception apparatus becomes higher than the power transmission priority of the first power reception apparatus. When the antitheft apparatus 10 detects the inversion of the power transmission priorities, the antitheft apparatus 10 can temporarily stop the wireless power supply to the first power reception apparatus and start wireless power supply to the second power reception apparatus (switching of target power reception apparatuses).

### (5) Summary

As described above, the antitheft apparatus 10 according to the present embodiment acquires event information that is a trigger for enabling the alert mode, and enables the alert mode. If the alert mode is enabled, the antitheft apparatus 10 monitors the movement of the protection object 30. If the movement of the protection object 30 is detected, the antitheft apparatus 10 outputs an alarm. Accordingly, the protection against the theft of the protection object 30 (i.e., the alert mode of the antitheft apparatus 10) can be switched between enabling and disabling, and when the protection is enabled, an alarm can be output in response to the act of taking away the protection object 30.

The event information that is a trigger for enabling the alert mode may be hand information. This makes it possible to enable the alert mode without using a part, such as a face, that a person often feels uncomfortable or suspicious about being photographed. The hand information may include information related to a biometric characteristic of a hand of a person. This allows the user authentication based on the biometric characteristic of the user of the protection object 30 and eliminates the need for the user to memorize any information necessary for the user authentication. The hand information may include at least one piece of information related to one or more gestures represented by a hand of a person. Accordingly, even if it is difficult to obtain a fine image, it is possible to prevent overlooking the event information that is a trigger for enabling the alert mode. Further, the gesture that is a trigger for disabling the alert mode may be the same as the gesture that is a trigger for enabling the alert mode. This can reduce the burden of memorizing the gesture on the user of the protection object 30. The antitheft apparatus 10 may refer to an image obtained by photographing a range including a predetermined area to acquire the event information that is a trigger for enabling the alert mode, and may turn on the light source so as to illuminate the predetermined area at least when the image is photographed. This can improve the detection accuracy of the edge in the predetermined area and prevent overlooking the event information that is a trigger for enabling the alert mode.

The antitheft apparatus 10 may acquire the hand information that is a trigger for enabling a power supply mode and enable the power supply mode. At least one of the hand information that is a trigger for enabling the alert mode or the hand information that is a trigger for disabling the alert mode may be the same as the hand information that is a trigger for enabling the power supply mode. This allows the user of the protection object 30 to register the event information for controlling the alert mode of the antitheft apparatus 10 without additional work, simply by registering the event information for enabling the power supply mode at the start of using the wireless power supply service.

The antitheft apparatus 10 may refer to an image obtained by photographing a range including a predetermined area to acquire the event information for controlling the alert mode. The antitheft apparatus 10 may acquire the event information that is a trigger for enabling the power supply mode and enable the power supply mode. When the power supply mode is enabled, the antitheft apparatus 10 may refer to an image obtained by capturing a range including the no-entry area defined in the vicinity of the protection object 30 as compared with the predetermined area to monitor the entry of the moving object into the no-entry area. When the antitheft apparatus 10 detects the entry of the moving object, the antitheft apparatus 10 may stop the radiation of the power transmission beam to the protection object 30. Accordingly, the user of the protection object 30 can control the alert mode without stopping the radiation of the power transmission beam. In addition, the antitheft apparatus 10 can prevent the moving object (e.g., a hand of a person) from being radiated with a high-power transmission beam.

The antitheft apparatus 10 may cause the alarm device 172 installed in the periphery of the protection object 30 to output an alarm. This makes it possible to attract the attention of a person in the periphery of the alarm device 172. When the alarm device 172 is outputting an alarm with the alert mode determined to be disabled, the antitheft apparatus 10 may stop outputting the alarm. Accordingly, even if the user of the protection object 30 accidentally triggers the alarm device 172, the outputting of the alarm can be stopped immediately. The antitheft apparatus 10 may cause a communication apparatus carried by the user of the protection object 30 to output an alarm. This makes it possible to notify the user at an early stage of the act of taking away the protection object 30. The antitheft apparatus 10 may cause the indicator 173 to output different visual information depending on whether the alert mode is enabled or disabled. This allows a person in the periphery of the indicator 173 (e.g., the user of the protection object 30) to perceive the state of the alert mode.

### (6) Modifications

Modifications of the present embodiment will be described.

### (6-1) Modification 1

Modification 1 will be described. Modification 1 is an example of providing a user of the protection object 30 with information related to improving a charging rate.

The antitheft apparatus 10 according to Modification 1 provides a user with information related to improving a charging rate as a trigger when an event of a decline in the charging rate occurs. For example, the event of a decline in the charging rate is at least one of the following:
• A power transmission beam is stopped;
• A frequency of stoppage of a power transmission beam exceeds a threshold;
• An expected value or a measured value of an amount of electric power transmitted by a power transmission beam falls below a threshold;
• A control parameter is generated so that transmitted power of a power transmission beam equals or falls below a threshold;
• A control parameter is generated so that a size of a spot to which a power transmission beam is focused at a position of a power reception surface equals or falls below a threshold; and
• A control parameter is generated so that a distance between a reference position of a spot to which the power transmission beam is focused at a position of the power reception surface and an optimal position equals or exceeds a threshold.

For example, the antitheft apparatus 10 provides the user with information related to improving a charging rate by executing at least one of the operations described below.
· Transmit a message to the protection object 30 and cause the protection object 30 to output the message.
· Transmit a message to an communication apparatus (for example, a wearable device worn by the user or a store-use tablet terminal installed at a seat of the user) other than the protection object 30 which is capable of communicating with the antitheft apparatus 10 and cause the information processing apparatus to output the message.
· Change an emitted color or a blinking pattern of the indicator 173 or another light source.

The message described above may be an image (including imaged texts) or audio that prompts the user to move a biological body (for example, a hand of the user) or an object (for example, an electronic equipment that needs to be protected from radio waves) away from the protection object 30. Alternatively, the message described above may be an image (including imaged texts) or audio that prompts the user to move the protection object 30 away from a biological body or an object.

With the antitheft apparatus according to Modification 1, the user can be made aware of desirable actions in order to improve a charging rate and can be prompted to take such actions. Accordingly, user experience of a wireless power supply service can be prevented from deteriorating due to a drop in charging rate caused by an involuntary action of the user.

### (7) Other Modifications

The storage device 11 may be connected to the antitheft apparatus 10 via a network NW. The storage device 31 may be connected to the protection object 30 via the network NW.

In the above description, an example has been described in which the steps are executed in a specific order in each processing, but the order in which the steps are executed is not limited to the described example as long as there is no dependency.

In the embodiment, an example has been described in which the antitheft system 1 provides the antitheft service in combination with the wireless power supply service. However, the antitheft system 1 may provide the antitheft service in combination with a service different from the wireless power supply service, or may provide only the antitheft service. In other words, the antitheft apparatus 10 need not include the power transmitting unit 15. Similarly, the protection object 30 need not include the power receiving unit 35. When the antitheft system 1 provides the antitheft service in combination with a service different from the wireless power supply service, the term "wireless power supply service" in the above description can be read as any service, as appropriate.

In the embodiment, an example where the antitheft apparatus 10 receives a power supply request has been shown. However, the antitheft apparatus 10 may perform wireless power supply to any of the protection objects 30 even without receiving a power supply request. As an example, the antitheft apparatus 10 may perform wireless power supply according to a predetermined schedule or determine necessity of wireless power supply by collecting information on remaining battery capacity from the protection object 30.

In the embodiment, an example of the antitheft apparatus 10 including one power transmitting unit 15 has been described. However, the antitheft apparatus 10 may include a plurality of individually controllable power transmitting units 15. Furthermore, the power transmitting unit 15 and other constituent elements (for example a control unit) in the power transmission apparatus 10 may be configured as separate apparatuses that are capable of communicating with each other. In other words, the antitheft apparatus 10 need not include the power transmitting unit 15. In this case, the power transmitting unit 15 can be built into an apparatus that includes a communication interface for receiving a control from the antitheft apparatus 10 and a processor (for example, a microcomputer) for driving the power transmitting unit 15 in accordance with the control from the antitheft apparatus 10. Further, the power transmitting unit 15 and the control unit that controls the power transmitting unit 15 may be configured as one or more apparatuses separated from the antitheft apparatus 10.

In a similar manner, the power receiving unit 35 and other constituent elements (for example a control unit) in the protection object 30 may be configured as separate apparatuses that are capable of communicating with each other. In other words, the protection object 30 need not include the power receiving unit 35. Further, the power receiving unit 35 and the control unit that controls the power receiving unit 35 may be configured as one or more apparatuses separated from the protection object 30.

In the embodiment, an example has been shown in which the protection object 30 corresponds to the power reception apparatus (that is, an apparatus that receives a wireless power supply service). However, the protection object 30 may not correspond to the power reception apparatus. The protection object 30 may be an article that cannot be a power reception apparatus (e.g., a wallet, a watch, an accessory, clothing, a bag, a document, a book, a stationery, or an electronic equipment that does not support a wireless charging function). Alternatively, a plurality of articles (which may include an article corresponding to the power reception apparatus) may be treated as the protection object 30.

In the embodiment, an example of the antitheft apparatus 10 causing the alarm device 172 to output an alarm has been described. However, the antitheft apparatus 10 may cause the protection object 30 to output an alarm. For example, the antitheft apparatus 10 may cause the protection object 30 to output an alarm by sound or an alarm by light. Accordingly, even when the protection object 30 is taken away from an initial position (e.g., a position of the protection object 30 when the alert mode of the antitheft apparatus 10 is enabled), it is possible to attract the attention of a person in the periphery of the protection object 30.

In the embodiment, an example of the antitheft apparatus 10 causing the alarm device 172 to output an alarm has been described. However, the antitheft apparatus 10 may more reliably prevent the theft of the protection object 30 by triggering a security apparatus. The security apparatus is, for example, an electric gate that can block the passage of people by being locked or closed by a control signal.

In the embodiment, an antenna is given as an example of the beam-emitting element. However, when a lightwave is used as the power-supplying electromagnetic wave, the beam-emitting element may be, for example, a light emitting device such as a laser device or an LED chip.

Although the embodiment of the present invention has been described in detail above, the scope of the present invention is not limited to the above-described embodiment. Further, various improvements and changes can be made to the above-described embodiment without departing from the gist of the present invention. The above-described embodiment and modifications can be combined.

### REFERENCE SIGNS LIST

- 1: Antitheft system
- 10: Antitheft apparatus
- 11: Storage device
- 12: Processor
- 13: Input/output interface
- 14: Communication interface
- 15: Power transmitting unit
- 16: Input device
- 17: Output device
- 30: Protection object
- 31: Storage device
- 32: Processor
- 33: Input/output interface
- 34: Communication interface
- 35: Power receiving unit
- 36: Input device
- 37: Output device
- 171: Light source
- 172: Alarm device
- 173: Indicator

## Claims

1. An antitheft apparatus comprising:
means for acquiring first event information related to an alert mode;
means for controlling the alert mode in accordance with the first event information;
means for monitoring movement of an object when the alert mode is enabled; and
means for outputting an alarm when the alert mode is enabled and movement of the object is detected.

2. The antitheft apparatus according to claim 1, wherein the first event information includes information related to a hand of a person or code information.

3. The antitheft apparatus according to claim 2, wherein the information related to the hand of the person includes information related to a biometric characteristic of the hand of the person.

4. The antitheft apparatus according to claim 2 or 3, wherein the information related to the hand of the person includes information related to one or more gestures represented by the hand of the person.

5. The antitheft apparatus according to claim 4, wherein a gesture that is a trigger for disabling the alert mode is same as a gesture that is a trigger for enabling the alert mode.

6. The antitheft apparatus according to any one of claims 1 to 5, wherein the means for acquiring the first event information refers to an image obtained by photographing a range including a predetermined area to acquire the first event information, and
the antitheft apparatus further comprises means for turning on a light source so as to illuminate the predetermined area at least at a time of photographing for the image.

7. The antitheft apparatus according to any one of claims 1 to 6, wherein the antitheft apparatus further comprises:
means for acquiring second event information related to a power supply mode; and
means for controlling the power supply mode in accordance with the second event information, and
at least one of the first event information that is the trigger for enabling the alert mode or the first event information that is the trigger for disabling the alert mode is same as the second event information that is a trigger for enabling the power supply mode.

8. The antitheft apparatus according to any one of claims 1 to 7, wherein the means for acquiring the first event information refers to an image obtained by photographing a range including a predetermined area to acquire the first event information, and
the antitheft apparatus further comprises:
means for acquiring second event information related to a power supply mode;
means for controlling the power supply mode in accordance with the second event information;
means for referring to an image obtained by photographing a range including a no-entry area defined in vicinity of the object as compared with the predetermined area when the power supply mode is enabled, to monitor an entry of a moving object into the no-entry area; and
means for stopping radiation of a power transmission beam to the object when the power supply mode is enabled and an entry of a moving object into the no-entry area is detected.

9. The antitheft apparatus according to any one of claims 1 to 8, wherein the means for outputting the alarm causes an alarm device installed in a periphery of the object or the object to output an alarm.

10. The antitheft apparatus according to claim 9, wherein the means for outputting the alarm stops outputting the alarm when the alarm device or the object is outputting an alarm with the alert mode determined to be disabled.

11. The antitheft apparatus according to any one of claims 1 to 10, wherein the means for outputting the alarm causes a communication apparatus carried by a user of the object to output an alarm.

12. The antitheft apparatus according to any one of claims 1 to 11, wherein the antitheft apparatus further comprises means for outputting different visual information depending on whether the alert mode is enabled or disabled.

13. An antitheft method performed by a computer, comprising:
acquiring first event information related to an alert mode;
controlling the alert mode in accordance with the first event information;
monitoring movement of an object when the alert mode is enabled; and
outputting an alarm when the alert mode is enabled and movement of the object is detected.

14. A program configured to cause a computer to function as:
means for acquiring first event information related to an alert mode;
means for controlling the alert mode in accordance with the first event information;
means for monitoring movement of an object when the alert mode is enabled; and
means for outputting an alarm when the alert mode is enabled and movement of the object is detected.
